# EUROPÄISCHE PATENTANMELDUNG

(11) **EP 2 384 629 A1**
(43) Veröffentlichungstag der Anmeldung: **09.11.2011**
(21) Anmeldenummer: 11150523.6
(22) Anmeldetag: 10.01.2011
(51) Int. Cl.: A21C 3/08

(54) **Zopfmaschine**

(30) Priorität: 07.05.2010 CH 7122010
(71) Anmelder: BBH Betriebseinrichtungen AG, 8856 Tuggen (CH)
(72) Erfinder: Kurath, Rolf, 8856 Tuggen (CH)
(74) Vertreter: Stump, Beat

(57) **Zusammenfassung**

Dargestellt ist ein Verfahren zum Flechten eines Zopfs aus mindestens zwei Teigsträngen, bei welchem die Teigstränge (5) für die Verflechtung übers Kreuz abgelegt werden, wobei die Kreuzungsstelle über einem Durchgang (9) liegt, in welchen der verflochtene Zopf hineinwachsen kann, und die Hälften der Teigstränge von diesem Durchgang (9) wegragen. Dabei werden die Teigstränge (5) abwechselnd schrittweise für einen jeweiligen Verflechtungsschritt an einem vorbestimmten endseitigen Abschnitt angehoben, dieser über den mindestens einen anderen Teigstrang (5) hinüber bewegt wird, so dass sich der bewegte Teigstrang (5) um den mindestens einen anderen Teigstrang (5) herumschlingt, und dann der bewegte endseitige Abschnitt weiter in eine nächste für einen weiteren Verflechtungsschritt vorbestimmte Position bewegt wird, solange, bis der Zopf fertig verflochten ist. Weiter dargestellt ist eine Vorrichtung zur Ausführung dieses Verfahrens.

## Beschreibung

Die vorliegende Erfindung betrifft ein Verfahren zum Flechten eines Zopfs nach dem Oberbegriff von Anspruch 1 sowie eine Vorrichtung zum Ausführen dieses Verfahrens nach dem Oberbegriff von Anspruch 8.

Eine Vorrichtung zum Flechten eines Zopfs zeigt CH PS 697 488, nach welcher Teigstränge übers Kreuz auf einem Drehtisch abgelegt werden, wobei wechselweise ein Teigstrang an seinen beiden Enden angehoben werden kann, während der andere Teigstrang auf dem Drehtisch liegen bleibt. Bei der anschliessenden Verdrehung des Drehtischs bewegt sich der liegen gebliebene Teigstrang unter dem an seinen beiden Enden stationär angehobenen Teigstrang weg, so dass sich die Teigstränge an ihrer Kreuzungsstelle verschlingen. Im nächsten Schritt werden die angehobenen Enden abgelegt und die Enden des vorher liegen gebliebenen Teigstrangs angehoben und wiederum der Drehtisch um einen Schritt verdreht, worauf eine nächste Schlinge entsteht, und so fort, bis die Teigstränge fertig zu einem Zopf verflochten sind.

Ein Nachteil dieser Vorrichtung kann darin gesehen werden, dass höhere Flechtgeschwindigkeiten schwer erreichbar sind bzw. dafür eine aufwendige Mechanik bereit gestellt werden muss.

Entsprechend ist es die Aufgabe der vorliegenden Erfindung, ein Verfahren und eine Vorrichtung bereitzustellen, die bei einfacher Mechanik höhere Flechtgeschwindigkeiten erlaubt.

Zur Lösung dieser Aufgabe besitzt das erfindungsgemässe Verfahren bzw. die erfindungsgemässe Vorrichtung die Merkmale der Ansprüche 1 bzw. 8.

Dadurch, dass entsprechend dem erfindungsgemässen Verfahren die jeweiligen Teigstränge an einem Endabschnitt angehoben und dann in eine vorbestimmte nächste Position bewegt werden, ist ein Verflechtungsschritt vollendet, ohne dass eine sonstige Bewegung, insbesondere eine Drehung des Drehtisches, notwendig wäre, so dass solch ein Verflechtungsschritt in kürzerer Zeit vollendet und die Flechtgeschwindigkeit entsprechend erhöht ist.

Dadurch, dass die erfindungsgemässe Vorrichtung mehr Halterungen aufweist, als zur Aufnahme der vorbestimmten Anzahl von Teigsträngen notwendig sind, sind stets freie Halterungen vorhanden, die bei der Verflechtung gemäss der vorliegenden, erfindungsgemässen Vorrichtung benötigt werden. Dadurch, dass die erfindungsgemässe Vorrichtung weiter Mittel aufweist, um einen Endabschnitt eines Teigstrangs von einer Halterung in eine nächste, freie Halterung zu bringen, die bezüglich eines anderen abgelegten Teigstrangs auf dessen anderen Seite liegt, entsteht jeweils eine Verschlingung der Teigstränge, die einem Flechtschritt zur Herstellung des Zopfs entspricht, ohne dass dazu eine weitere Mechanik benötigt wird. Wird Flechtschritt auf Flechtschritt ausgeführt, bis die Teigstränge aufgebraucht sind, ist der Zopf fertig gestellt.

Die vorbestimmte Anzahl der zu verflechtenden Teigstränge ist nicht auf zwei beschränkt und kann beispielsweise drei, vier oder mehr betragen, obschon nachstehend die Erfindung im Hinblick auf zwei zu verflechtende Teigstränge beschrieben wird. Entsprechend kann eine erfindungsgemässe Vorrichtung auf die Verflechtung von drei Teigsträngen ausgelegt und mit der notwendigen Anzahl an Halterungen ausgestattet werden. Solch eine Vorrichtung kann dann wahlweise mit zwei oder drei Teigsträngen betrieben werden und einen entsprechenden Zopf herstellen, da durch die freien Halterungen der Verflechtvorgang nicht gestört wird. Der Fachmann kann einen entsprechend flexible Steuerung (im Hinblick auf die für zwei oder für drei Teigstränge notwendigen Bewegungen der Vorrichtung) ohne Weiteres selbst konzipieren.

Bevorzugte Ausführungsformen sind in den abhängigen Ansprüchen dargestellt.

Die Erfindung wird anhand der Figuren näher erläutert.
Es zeigt:
- Fig. 1: schematisch eine allgemeine Ansicht einer Vorrichtung, mit der das erfindungsgemässe Verfahren ausgeführt werden kann,
- Fig. 2: eine Ansicht der Halterungen für die Teigstränge mit ihrem Verschwenkantrieb, und
- Fig. 3a bis 3g: eine Sequenz der Flechtschritte zur Herstellung eines Zopfs, und
- Fig. 4: eine Ansicht einer abgewandelten Ausführung der Halterungen für die Teigstränge.

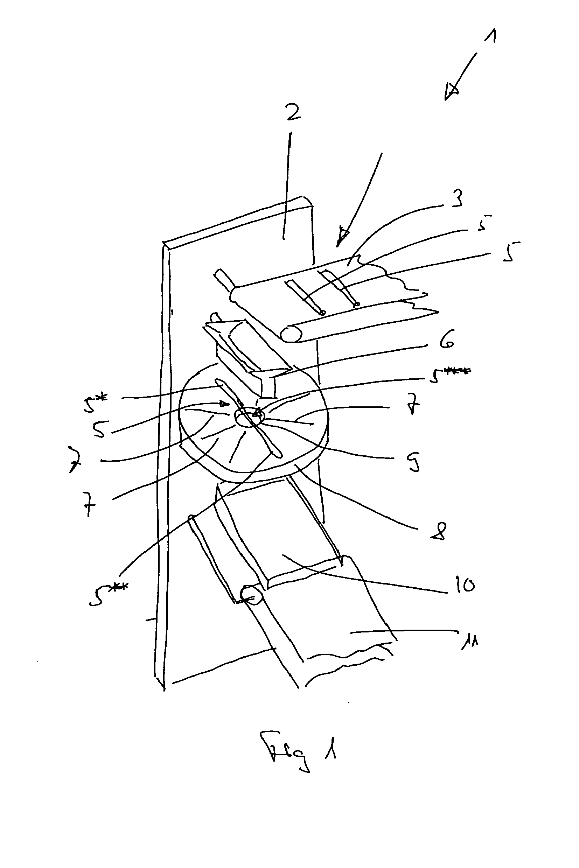

Figur 1 zeigt schematisch eine Ansicht einer Ausführungsform einer Vorrichtung 1, mit der das erfindungsgemässe Verfahren ausgeführt werden kann. Wie oben erwähnt, sollen bei dieser Ausführungsform nicht mehr als zwei Teigstränge verarbeitet werden können. Dargestellt ist ein Maschinenrahmen 2, in dem die Komponenten der Vorrichtung 1 abgestützt sind. Ein Förderband 3 als Teil eines Zubringers für Teigstränge 5 bringt diese zu einem ebenfalls zum Zubringer gehörenden Falltrichter 6. Aus diesem fallen die Teigstränge 5 auf sternförmig angeordnete, durch die Striche 7 angedeuteten Halterungen, die bei der gezeigten Ausführungsform auf einem Drehtisch 8 angeordnet sind. Dabei wird ein jeweiliger Teigstrang 5 derart in zwei Halterungen geworfen, dass er mit jedem seiner Endabschnitte 5* und 5** von einer der Halterungen aufgenommen werden kann, wie dies in der Figur dargestellt ist.

Die Halterungen bilden damit eine Anordnung, die eine vorbestimmte Anzahl (hier: zwei) von zu verflechtenden Teigsträngen aufnimmt und für die Verflechtung bereithält.

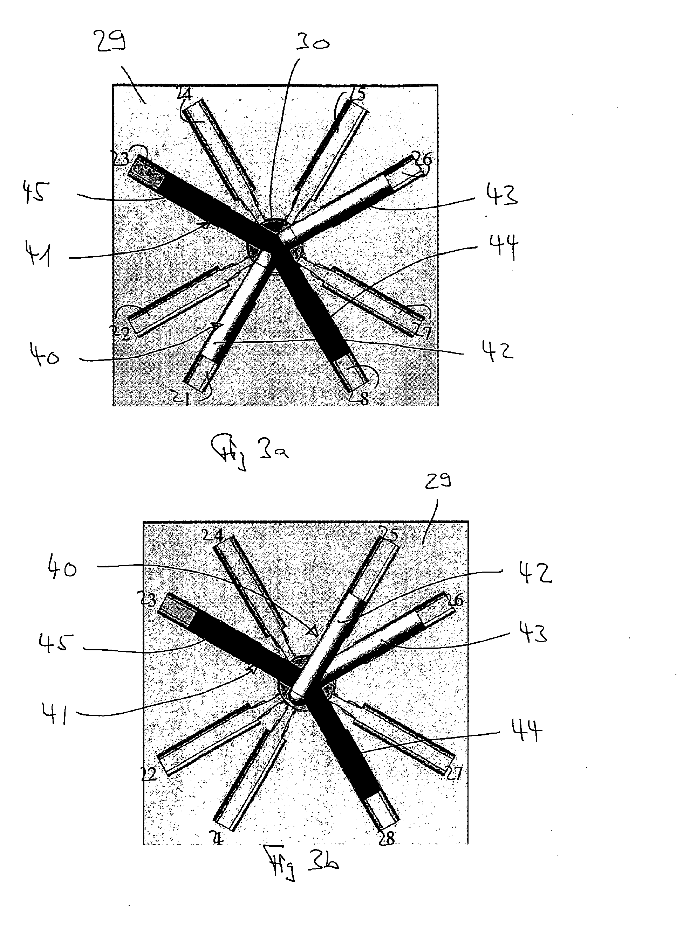

Ein zur Entlastung der Figur weggelassener Drehantrieb ist ausgebildet, den Drehtisch 8 schrittweise zu verdrehen, so dass ein nächster Teigstrang 5 in noch leere und für diesen vorgesehene Halterungen (Striche 7) fällt. Dadurch werden die Halterungen geeignet beladen, so dass die Teigstränge 5 zu einem Zopf verflochten werden könnten, wie dies anhand der Figuren 3a bis 3i dargestellt ist. Der Drehantrieb und der Falltrichter 6 als Ablegeeinheit für die Teigstränge 5 bilden damit Positionierungsmittel des Zubringers, um die Teigstränge in den Halterungen zu positionieren. Bei einer bevorzugten Ausführungsform sind die Positionierungsmittel ausgebildet, einen Teigstrang in Halterungen abzulegen, die sich schräg, und nicht gerade gegenüberliegen, also über der Öffnung 9 vorbestimmt abgewinkelt angeordnet sind, wie dies weiter unten beschreiben ist.

Die Halterungen sind derart angeordnet, dass die abgelegten Teigstränge 5 in deren mittlerem Bereich 5*** übers Kreuz übereinander liegen und zugleich über einem im Zentrum des Drehtischs 8 gelegenen, als Öffnung 9 ausgebildeten Durchgang angeordnet sind. Die Öffnung 9 erlaubt, dass der Zopf während dem Flechten nach unten wächst, dann auf eine Rutsche 10 gelangt, von welcher er über ein Förderband 11 aus der Vorrichtung 1 abgegeben wird.

Bei einer weiteren Ausführungsform ist eine beispielsweise zylinderförmige Ausgabeeinheit für den verflochtenen Zopf vorgesehen, Diese ist unter dem Durchgang in vertikaler Lage angeordnet, derart dass der während der Verflechtung nach unten wachsende Zopf von dieser aufgenommen werden kann. Die Ausgabeeinheit weist ein Bodenelement auf, auf das sich das nach unten wachsende Kopfende des Zopfs stützt, wobei das Bodenelement sich mit dem laufenden Verflechtungsfortschritt nach unten bewegt. Ist der Zopf fertig gestellt, kippt die Ausgabeeinheit als ganzes seitlich weg, so dass der Zopf horizontal liegt. Durch die Rückbewegung des Bodenelements wird dann der Zopf ausgestossen. Bevorzugt ist in der Ausgabeeinheit ein Förderband vorgesehen, dass in deren vertikaler Lage seitlich neben dem hineinwachsenden Zopf liegt, und auf welches der Zopf nach dem Verkippen der Ausgabeeinheit zu liegen kommt, so dass dieser alternativ durch das Förderband ausgestossen werden kann. Weiter ist es bevorzugt, dass das Bodenelement durch einen pneumatisch oder elektrisch angetriebenen Zylinder bewegt wird.

Der Drehtisch 8 bildet zusammen mit den Halterungen und dem Durchgang 9 eine Verflechtstation für die Teigstränge 5.

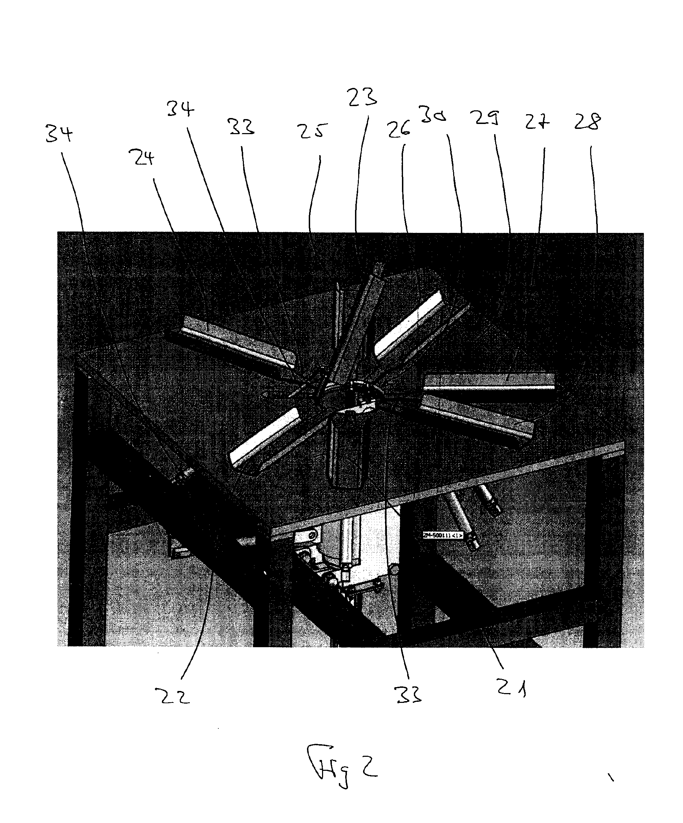

Figur 2 zeigt eine Ansicht auf eine Verflechtungsstation gemäss einer weiteren, bevorzugten Ausführungsform der Erfindung. Ersichtlich sind acht als langgestreckte Schalen 21 bis 28 ausgebildete Halterungen für Teigstränge 5 (Figur 1) bzw. deren Endabschnitte. Mit Ausnahme der Schale 23 liegen die Schalen 21,22 und 24 bis 28 auf einem Tisch 29 und befinden sich damit in ihrer Ruheposition. Die Schale 23 befindet sich in Übergabeposition. Die Schalen 21 bis 28 weisen abwechselnd je einen grösseren und dann einen kleineren Abstand von einander auf und liegen sich jeweils paarweise gegenüber.

Der Tisch 29 ist im Gegensatz zur in Figur 1 dargestellten Ausführungsform nicht drehbar ausgebildet, sondern stationär. Damit ist es erforderlich, dass die Ablegeeinheit, hier der Falltrichter 6 (Figur 1) gegenüber dem Tisch 29 verdrehbar angeordnet ist, so dass die Ablegeeinheit gegenüber den Halterungen relativ verdrehbar ausgebildet ist, derart, dass sie die verschiedenen, einem Teigstrang zugewiesenen Halterungen nacheinander in vorgesehener Reihenfolge bedienen kann.

Weiter dargestellt ist ein hier als im Tisch 29 vorgesehene Öffnung 30 ausgebildeter Durchgang für einen Zopf.

Jede der Schalen 21 bis 29 kann durch eine Bewegungseinrichtung unabhängig zwischen einer Ruheposition (Schalen 21,22 und 24 bis 28) und einer Übergabeposition (Schale 23) hin und her bewegt werden. Dazu sind die Schalen 21 bis 28 je an einem kurzen Hebel 33 angeordnet, der auf einer zur Entlastung der Figur nicht dargestellten, horizontal angeordneten Verschwenkachse angeordnet ist, die wiederum im Bereich der Öffnung 30 festgelegt ist. Diese Konfiguration erlaubt, die Schalen 21 bis 28 zwischen einer Ruheposition (auf dem Tisch aufliegend) und einer Übergabeposition (vom Tisch gegen oben abstehend) zu verschwenken. Mit anderen Worten liegt die Verschwenkachse im Bereich des inneren Endes der Schalen 21 bis 28 bzw. der Halterungen, so dass deren äusseres Ende aus der Ruheposition nach oben, in die Übergabeposition und aus dieser wieder zurück in die Ruheposition verschwenkbar ist.

Pneumatische Zylinder 34 sind einerseits am Rahmen 2 (Figur 1) festgelegt und wirken andererseits auf die Hebel 33 jeder Schale 21 bis 28, so dass sich durch diese pneumatischen Verschwenkantriebe eine Bewegungseinrichtung für die unabhängige Bewegung jeder Schale 21 bis 28 ergibt.

Zur Entlastung der Figur sind die weiteren, in Figur 1 dargestellten Komponenten der erfindungsgemässen Vorrichtung weggelassen.

Figur 3a zeigt den Tisch 29 von oben, ebenfalls die Schalen 21 bis 28, die sich paarweise gegenüberliegen. Die Halterungen 21 bis 28 weisen abwechselnd einen grösseren und einen kleineren Abstand von einander auf. Zwei Teigstränge 40 und 41 sind durch Positionierungsmittel mit ihren Hälften 42,43 bzw. 44,45 in den Schalen 21,26 und 28,23 abgelegt. Dadurch sind die Teigstränge 40, 41 über der Öffnung 30 abgewinkelt.

Damit sind für eine vorbestimmte Anzahl von zwei zu verflechtenden Teigsträngen mehr als fünf, nämlich acht Halterungen vorgesehen, also mehr, als die hier vier Halterungen, die für die Aufnahme der vorbestimmten Anzahl von Teigsträngen notwendig sind.

Die in der Figur gezeigte, abgewinkelte Lage der Teigstränge 40,41 kann erreicht werden, in dem der Falltrichter 6 (Figur 1) zuerst den einen Endabschnitt 42,44 des Teigstrangs 40,41 in die zugeordnete Schale 21,28 fallen lässt (beispielsweise indem sich am Boden des Falltrichters 6 zuerst eine nur bis in dessen Mitte reichende Klappe öffnet), worauf eine Relativverdrehung zwischen dem Tisch 29 und dem Falltrichter (oder dem Drehtisch 8 und Falltrichter 6 von Figur 1) erfolgt, und dann den zweiten Endabschnitt 43,45 in die zugeordnete Schale 26,23 fallen gelassen wird (indem eine entsprechende zweite Klappe im Falltrichter 6 öffnet)

Der Drehtisch 8 und der Falltrichter 6 (Figur 1) bzw. der Tisch 29 und ein Verdrehantrieb für den Falltrichter bilden dann Positionierungsmittel für die Teigstränge 40,41.

In der dargestellten Anordnung liegt der Teigstrang 41 über dem Teigstrang 40.

Für den ersten Verflechtungsschritt wird nun er Endabschnitt 42 des Teigstrangs 40 angehoben, über den anderen, quer liegenden Teigstrang 41 bewegt und in der gegenüberliegenden Schale 25 abgelegt; der Teigstrang 40 schlingt sich damit um den anderen Teigstrang 41.

Figur 3b zeigt diese nun erreichte Lage. Damit wird der Vorteil der abgewinkelten Positionierung der Teigstränge 40,41 ersichtlich: dem im ersten Verflechtungsschritt anzuhebenden Endabschnitt 42 liegt ein leerer Platz, hier die leere Schale 25 gegenüber. Damit kann der bewegte Endabschnitt 42 auf einer geraden Bahn in die gegenüberliegende Schale 25 gebracht oder auch geworfen werden, wie dies anhand der in Figur 2 gezeigten Vorrichtung näher erläutert werden soll:
Wird eine der Schalen 21 bis 28 aus ihrer Ruhelage schnell nach oben verschwenkt und in der Übergabeposition angehalten (in Figur 2 ist dies die Schale 23) bewegt sich ein darin liegender Teigstrang (bzw. dessen Endabschnitt) weiter, in Richtung auf die Schale 28 zu. Bei genügend hoher Verschwenkgeschwindigkeit der Schale 23 landet der so geworfene Endabschnitt des Teigstrangs in der Schale 28 in der gleichen Lage, wie er sie vor dem Wurf in der Schale 23 eingenommen hatte.
Wird nun - immer am Beispiel der Schale 23 von Figur 2 - die Schale bzw. Halterung, in der ein Endabschnitt eines Teigstrangs ruht, über 90° hinaus, z.B. um 120° oder mehr verschwenkt, genügt eine geringe Verschwenkgeschwindigkeit am Ort der Übergabeposition, der bewegte Endabschnitt des Teigstrangs fällt dann mehr in die gegenüberliegende Schale 28 herunter, als dass er in diese geworfen wird. Bei einem Verschwenkwinkel von 90° oder weniger als 90°, z.B. 30° bis 60° und einer hohen Verschwenkgeschwindigkeit am Ort der Übergabeposition wird der bewegte Endabschnitt des Teigstrangs richtiggehend über den quer liegenden anderen Teigstrang geworfen und landet (unter Umständen recht hart) in der gegenüberliegenden Schale 28. Dabei schlingt sich der bewegte Teigstrang um den anderen Teigstrang herum.

Je schneller die Verschwenkbewegung ausfällt, desto heftiger und schneller erfolgt der Wurf, wobei eine entsprechend kurze Zeit für solch einen Verflechtungsschritt notwendig ist. Je nach der Konsistenz des geworfenen Teigs sind jedoch der Wurfgeschwindigkeit Grenzen gesetzt: der Teigstrang darf sich beim Aufprall in die gegenüberliegende Halterung 28 nicht unzulässig verformen. Umgekehrt droht diese Gefahr nicht bei langsamer Verschwenkbewegung und grossem Verschwenkwinkel, wo der Teigstrang in die gegenüberliegende Halterung bloss hineinfällt. Dafür ist aber die benötigte Zeit vergleichsweise lang.

Die in Figur 2 gezeigte Übergabeposition mit einem Verschwenkwinkel von leicht mehr als 90° stellt diesbezüglich einen Kompromiss dar.

Bei einer weiteren bevorzugten Ausführungsform sind deshalb die Schalen 21 bis 29 bzw. die Halterungen innen dem Negativ der gewünschten Aussenform des Teigstrangs entsprechend ausgeformt. Damit wird ein hinein gefallener bzw. hinein geworfener Teigstrang beim Aufprall nicht verformt, sondern vielmehr in seine gewünschte Form zurückgebracht und herhält seine gewünschte Aussenkontur zurück. Vorteilhafterweise sind die Schalen deshalb im Querschnitt halbkreisförmig ausgebildet.

Zusammenfassend sind in Figur 2 Mittel zum Verflechten der Teigstränge vorgesehen, in der beschriebenen Ausführungsform bestehend aus dem pneumatsichen Verschwenkantrieb für jede Halterung 21 bis 28 und der Verschwenkachse für diese Halterungen. Diese Mittel bewirken, dass ein in einer bewegten Halterung abgelegter Endabschnitt eines Teigstrangs über einen anderen abgelegten Teigstrang hinüber bewegt und so in eine nächste, freie Halterung gelangt, welche bezüglich dieses anderen abgelegten Teigstrangs auf dessen gegenüberliegenden Seite liegt.

Wie erwähnt, zeigt Figur 3b die Lage der Teigstränge 40,41 nach dem ersten Flechtschritt.

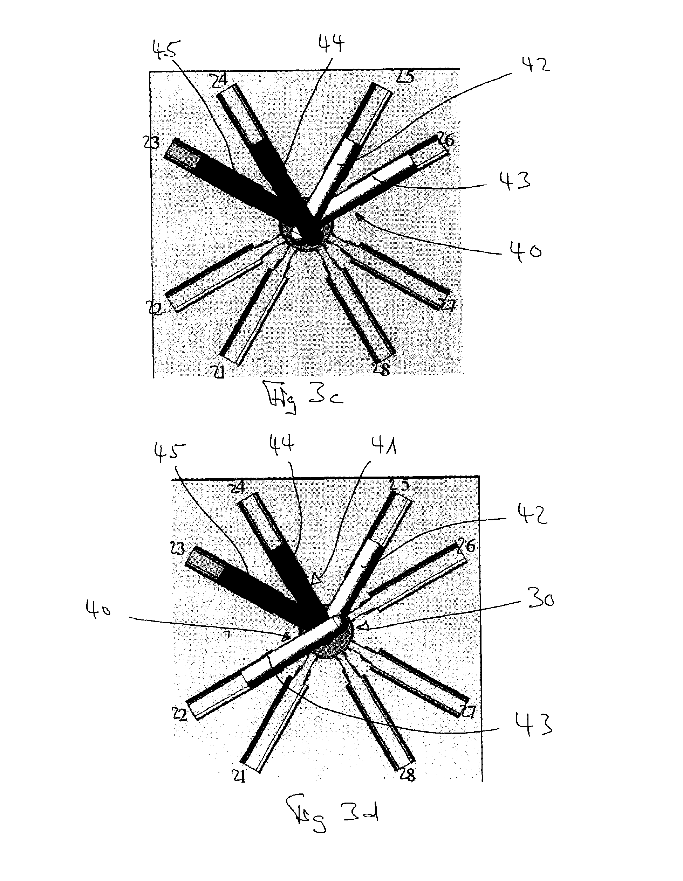

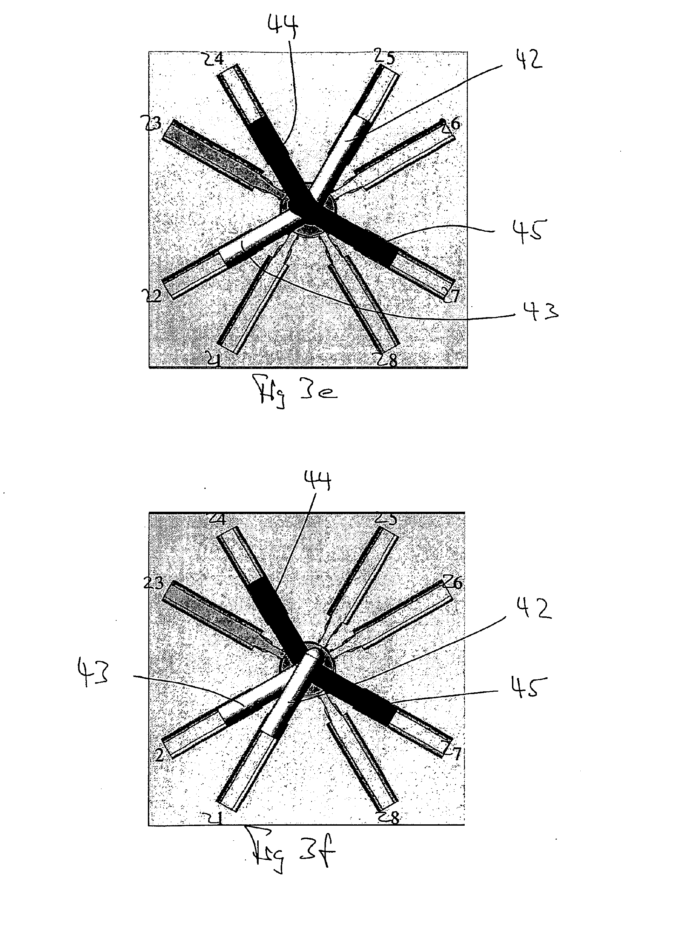

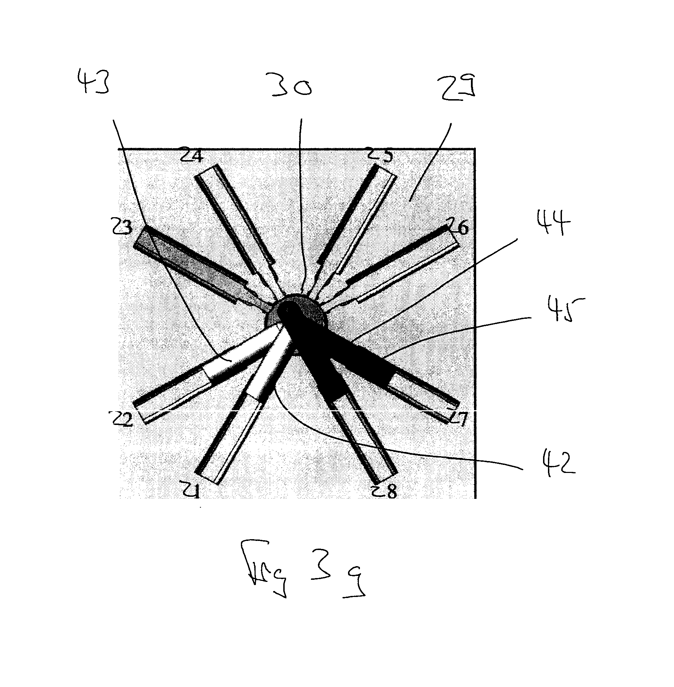

Für den weiteren, zweiten Flechtschritt wird einer der Endabschnitte 44,45 des anderen Teigstrangs 41 bewegt, hier der Endabschnitt 44, und in die gegenüberliegende Schale 24 geworfen. Das Resultat zeigt Figur 3c. Im nächsten Verflechtungsschritt wird der untere Endabschnitt 43 des im vorherigen Verflechtungsschritt nicht bewegten Teigstrangs 40 geworfen, er landet bestimmungsgemäss in der gegenüberliegenden Schale 22, s. Figur 3 d.

Im vierten Verflechtungsschritt gilt dasselbe: der unterste Endabschnitt, hier der Endabschnitt 45 des im vorherigen Verflechtungsschritt nicht bewegten Teigstrangs 41 wird in die Schale 27 geworfen, siehe Figur 3e.

Es ergibt sich, dass die Teigstränge abwechselnd schrittweise für einen jeweiligen Verflechtungsschritt an einem vorbestimmten endseitigen Abschnitt angehoben, dieser über den mindestens einen anderen Teigstrang hinüber bewegt wird, so dass sich der bewegte Teigstrang um den mindestens einen anderen Teigstrang herumschlingt, und dann der bewegte endseitige Abschnitt weiter in eine nächste für einen weiteren Verflechtungsschritt vorbestimmte Position bewegt wird, solange, bis der Zopf fertig verflochten ist.

Dabei bestimmt der Fachmann den vorbestimmt anzuhebenden Abschnitt nach dem gewünschten Flechtmuster des fertigen Zopfs. Ebenso wird die nächste vorbestimmte Position des bewegten endseitigen Abschnitts eine gegenüberliegende Halterung sein.

Wie oben beschreiben, wird vorteilhafterweise der jeweils vorbestimmte endseitige Abschnitt angehoben und über den mindestens einen anderen Teigstrang hinüber geworfen, derart, dass er durch den Wurf in der genannten weiteren vorbestimmten Position landet.

Für bestimmte Anwendungen (bzw. bei nicht wurffähigem Teig) ist es möglich, dass für einen Verflechtungsschritt der jeweils vorbestimmte endseitige Abschnitt angehoben und über den mindestens einen anderen Teigstrang hinüber geführt wird, derart, dass er auf der anderen Seite in die weitere vorbestimmte Position bloss hineinfällt.

Bei der fortschreitenden Verflechtung wird jeweils für einen nachfolgenden Verflechtungsschritt der unterste Endabschnitt eines im vorherigen Verflechtungsschritt nicht bewegten Teigstrangs angehoben.

Damit ergibt sich für den fünften Verflechtungsschritt, dass der Endabschnitt 42 des Teigstrangs 40 in die gegenüberliegende Schale 21 geworfen wird, s. Figur 3f, und danach der Endabschnitt 34 des Teigstrangs 41 in die Schale 28, s. Figur 3g.

Die Verflechtung kann nun analog zu den oben dargestellten Verflechtungsschritten fortgesetzt werden, bis die Teigstränge 40,41 über ihre ganze Länge verflochten und der Zopf damit fertig gestellt ist.

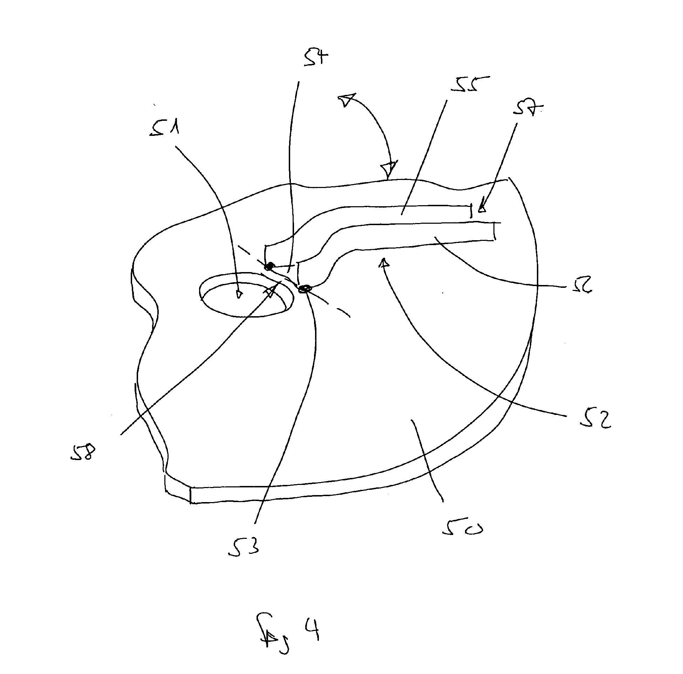

Figur 4 zeigt eine weitere Ausführungsform einer Halterung 52. Dargestellt ist ein Ausschnitt aus dem Tisch 29 sowie der Durchgang 30 und, zur Entlastung der Figur, nur eine der auf dem Tisch angeordneten Halterungen 52. Wie es oben anhand der Figuren 2 und 3 beschrieben ist, kann die Halterung zwischen der in der

Figur gezeigten Ruheposition und einer Übergabeposition hin und her bewegt werden (s. den eingezeichneten Doppelpfeil und die gestrichelte Verschwenkachse). Die Halterung 52 besitzt einen Boden 54 sowie Seitenwände 55,56, wobei der Boden 54 gewölbt ausgebildet ist. Mit dieser Wölbung 58 wird bezweckt, den bewegten Teigstrang optimal um den quer zur Halterung liegenden anderen Teigstrang herumzuschlingen: steht die Halterung 52 in Übergabeposition, erstreckt sich die Wölbung 58 einem Erker ähnlich in Richtung über den quer liegenden Teigstrang, so dass der bewegte Teigstrang eng am quer liegenden Teigstrang anliegend um diesen - gewissermassen zwangsgeführt - herumgeschlungen wird. Der Fachmann kann die Wölbung im Hinblick auf die Dicke der Teigstränge und die Konsistenz des Teigs geeignet anpassen, um für einen jeweiligen Zopf das optimale Verflechtungsresultat zu erhalten.

Die Form der in der Figur gezeigten Wölbung entspricht einer bevorzugten Ausführungsform und kann nach Bedarf durch den Fachmann weiter modifiziert werden.

Der Fachmann wird, wie oben erwähnt, je nach dem gewünschten Flechtmuster die Anzahl der zu verflechtenden Teigstränge und deren Länge bestimmen, ebenso die Sequenz der für die Verflechtung anzuhebenden und über den mindestens einen anderen Teigstrang hinüber zu bewegenden Endabschnitte und die erfindungsgemässe Vorrichtung entsprechend auslegen bzw. deren Steuerung für die konkrete Anwendung entsprechend programmieren.

An dieser Stelle sei noch hinzugefügt, dass die minimale Anzahl Halterungen fünf beträgt, da für die Verflechtung mindestens zwei Teigstränge benötigt werden, was vier Halterungen beansprucht, und wenigstens eine freie Halterung vorgesehen muss, um einen Teigstrang für einen Verflechtungsschritt in eine leere Halterung bewegen zu können.

Bevorzugt liegen im Ausführungsbeispiel gemäss der Figuren 3a bis 3g je zwei Schalen 21 bis 28 näher bei einander. Damit muss jeder der Teigstränge 40,41 weniger abgewinkelt abgelegt werden, als dies der Fall wäre, wenn die Schalen 21 bis 28 mit gleichen Abständen auf dem Tisch 29 verteilt wären.

## Patentansprüche

1. Verfahren zum Flechten eines Zopfs aus mindestens zwei Teigsträngen (40,41), bei welchem die Teigstränge (40,41) für die Verflechtung übers Kreuz abgelegt werden, wobei die Kreuzungsstelle über einem Durchgang liegt, in welchen der verflochtene Zopf hineinwachsen kann, und die endseitgen Abschnitte (42,43,44,45) der Teigstränge (40,41) von diesem Durchgang wegragen, **dadurch gekennzeichnet, dass** die Teigstränge (40,41) abwechselnd schrittweise für einen jeweiligen Verflechtungsschritt an einem vorbestimmten endseitigen Abschnitt (42,43,44,45) angehoben, dieser über den mindestens einen anderen Teigstrang (41,40) hinüber bewegt wird, so dass sich der bewegte Teigstrang (40,41) um den mindestens einen anderen Teigstrang (41,40) herumschlingt, und dann der bewegte endseitige Abschnitt (42,43,44,45) weiter in eine nächste für einen weiteren Verflechtungsschritt vorbestimmte Position bewegt wird, solange, bis der Zopf fertig verflochten ist.

2. Verfahren nach Anspruch 1, wobei für einen Verflechtungsschritt der jeweils vorbestimmte endseitige Abschnitt (42,43,44,45) angehoben und über den mindestens einen anderen Teigstrang (41,40) hinüber geworfen wird, derart, dass er durch den Wurf in der weiteren vorbestimmten Position landet.

3. Verfahren nach Anspruch 1, wobei für einen Verflechtungsschritt der jeweils vorbestimmte endseitige Abschnitt (42,43,44,45) angehoben und über den mindestens einen anderen Teigstrang (41,40) hinüber geführt wird, derart, dass er auf der anderen Seite in die weitere vorbestimmte Position hineinfällt.

4. Verfahren nach einem der Ansprüche 1 bis 3, wobei die für die Verflechtung übers Kreuz abgelegten Teigstränge (40,41) über dem Durchgang abgewinkelt abgelegt werden, derart, dass mindestens im ersten Verflechtungsschritt dem vorbestimmten, anzuhebenden endseitigen Abschnitt (42,43,44,45) eines Teigstrangs ein leerer Platz gerade gegenüberliegt.

5. Verfahren nach einem der Ansprüche 1 bis 4, wobei für einen nachfolgenden Verflechtungsschritt der unterste Endabschnitt (42,43,44,45) eines im vorherigen Verflechtungsschritt nicht bewegten Teigstrangs (40,41) angehoben wird.

6. Verfahren nach Anspruch 1, wobei am Ort, wo die endseitge Abschnitte (42,43,44,45) der Teigstränge (40,41) abgelegt werden, Halterungen zur Aufnahme der endseitge Abschnitte(42,43,44,45) vorgesehen werden, und wobei derart ausgeformte Halterungen verwendet werden, dass ein hineingefallener Abschnitt (42,43,44,45) eines Teigstrang seine gewünschte Aussenkontur erhält und / oder wobei die endseitge Abschnitte(42,43,44,45) der Teigstränge (40,41) über die Halterungen angehoben und bewegt werden.

7. Vorrichtung zum Verflechten von Teigsträngen (40,41) zu einem Zopf nach dem Verfahren von Anspruch 1, mit einer Anordnung, welche die zu verflechtenden Teigstränge (40,41) aufnimmt und für die Verflechtung bereithält, die sternförmig angeordnete Halterungen zur Aufnahme je eines Endabschnitts der zu verflechtenden Teigstränge (40,41) aufweist, einem Zubringer für Teigstränge (40,41), der diese in den Halterungen positioniert, einem im Zentrum der Anordnung vorgesehenen Durchgang für den verflochtenen Zopf, der aus der Anordnung abgegeben wird, **dadurch gekennzeichnet, dass** die Anordnung mindestens fünf Halterungen aufweist und Mittel zum Verflechten der Teigstränge (40,41) vorgesehen sind, die Halterungen schrittweise nach einander einzeln zu bewegen, derart, dass ein in einer bewegten Halterung abgelegter Endabschnitt (42,43,44,45) eines Teigstrangs (40,41) über einen anderen abgelegten Teigstrang (42,43, 44,45) hinüber bewegt und so in eine nächste, freie Halterung gelangt, welche bezüglich dieses anderen abgelegten Teigstrangs (41,40) auf dessen gegenüberliegenden Seite liegt.

8. Vorrichtung nach Anspruch 7, wobei mindestens sechs Halterungen vorgesehen sind, die sich jeweils paarweise gegenüberliegen, wobei bevorzugt die Halterungen abwechselnd je einen grösseren und dann einen kleineren Abstand von einander aufweisen.

9. Vorrichtung nach einem der vorangehenden Ansprüche 7 bis 8, wobei die Mittel zum Verflechten eine Bewegungseinrichtung für die unabhängige Bewegung jeder Halterung zwischen einer Ruheposition und einer Übergabeposition aufweist.

10. Vorrichtung nach Anspruch 11, wobei die Halterungen als langgestreckte, zwischen einer Ruheposition und einer Übergabeposition verschwenkbare Schalen (21 bis 28) ausgebildet sind, und wobei die Verschwenkachse jeder Halterung im Bereich ihres inneren Endes liegt und deren äusseres Ende aus der Ruheposition der Halterung nach oben, in die Übergabeposition und aus dieser wieder zurück in die Ruheposition verschwenkbar ist, wobei bevorzugt die Bewegungseinrichtung einen pneumatischen oder elektrischen Verschwenkantrieb für die Halterungen aufweist.

11. Vorrichtung nach Anspruch 7, wobei der Zubringer Positionierungsmittel aufweist, um einen frischen Teigstrang derart in den Halterungen abzulegen, dass dieser über dem Durchgang vorbestimmt abgewinkelt angeordnet ist.

12. Vorrichtung nach Anspruch 11, wobei die Positionierungsmittel eine Ablegeeinheit für Teigstränge (40,41) in den zugewiesenen Halterungen aufweisen und wobei die Ablegeeinheit gegenüber den Halterungen relativ verdrehbar ausgebildet ist, derart, dass diese die verschiedenen Halterungen nacheinander in vorgesehener Reihenfolge bedienen kann.

13. Vorrichtung nach Anspruch 7, wobei die Halterungen innen dem Negativ der vorbestimmten, gewünschten Aussenform eines Teigstrangs entsprechend ausgeformt sind und vorzugsweise im Querschnitt halbkreisförmig ausgebildet sind.

14. Vorrichtung nach Anspruch 1, wobei unter dem Durchgang eine Ausgabeeinheit zur Aufnahme des Zopfs vorgesehen ist, mit einem längs dieser verschiebbaren Bodenelement zur laufenden Stützung des nach unten wachsenden Zopfs, wobei die Ausgabeeinheit verkippbar angeordnet ist, derart, dass der fertige Zopf mit der Ausgabeeinheit gekippt und durch das Bodenelement ausgestossen werden kann.

15. Vorrichtung nach Anspruch 14, wobei in der Ausgabeeinheit ein Förderband vorgesehen ist, auf dem der Zopf nach der Verkippung aufliegen kann.
